(19) Europäisches Patentamt
European Patent Office
Office européen des brevets

(11) **EP 0 953 890 B2**

(12) # NEUE EUROPÄISCHE PATENTSCHRIFT
Nach dem Einspruchsverfahrens

(45) Veröffentlichungstag und Bekanntmachung des Hinweises auf die Entscheidung über den Einspruch:
**13.08.2008   Patentblatt 2008/33**

(51) Int Cl.:
***G05B 19/042*** *(2006.01)*      ***H02J 3/14*** *(2006.01)*

(45) Hinweis auf die Patenterteilung:
**07.07.2004   Patentblatt 2004/28**

(21) Anmeldenummer: **99104421.5**

(22) Anmeldetag: **05.03.1999**

(54) **Haushaltgerät sowie Verfahren zum Betreiben desselben**

Household appliance and its method of operation

Appareil électroménager et sa méthode de commande

(84) Benannte Vertragsstaaten:
**DE FR GB IT NL SE**

(30) Priorität: **27.04.1998   DE 19818815**

(43) Veröffentlichungstag der Anmeldung:
**03.11.1999   Patentblatt 1999/44**

(73) Patentinhaber: **AEG Hausgeräte GmbH**
**90429 Nürnberg (DE)**

(72) Erfinder:
• **Steiner, Winfried**
**90762 Fürth (DE)**
• **Vogel, Jürgen**
**91448 Emskirchen (DE)**

• **Reiss, Doris**
**90451 Nürnberg (DE)**

(56) Entgegenhaltungen:
**EP-A- 0 456 872           EP-A- 0 538 078**
**EP-A- 0 620 631           EP-A- 0 727 668**
**EP-A- 0 859 304           WO-A-93/12284**
**DE-A- 4 219 276           DE-A- 4 231 365**
**DE-A- 19 705 666          US-A- 4 663 948**
**US-A- 5 408 917**

Bemerkungen:
Die Akte enthält technische Angaben, die nach dem Eingang der Anmeldung eingereicht wurden und die nicht in dieser Patentschrift enthalten sind.

EP 0 953 890 B2

**Beschreibung**

Die Erfindung betrifft ein Haushaltsgerät gemäß dem Oberbegriff des Anspruchs 1 sowie ein Verfahren zum Betreiben eines Haushaltsgerätes gemäß dem Oberbegriff des Anspruchs 7.

Ein Haushaltsgerät kann üblicherweise mit einem oder mehreren vorwählbaren Arbeitsprogrammen betrieben.werden und benötigt während des Ablaufes des vorgewählten Arbeitsprogrammes elektrische Energie..So kann beispielsweise bei einer Geschirrspülmaschine eines von mehreren zur Verfügung stehenden Spülprogrammen ausgewählt werden. Die Spülprogramme unterscheiden sich dabei im wesentlichen in der Programmlaufzeit und der maximalen Betriebstemperatur einer Spülflüssigkeit. Die Spülflüssigkeit wird dabei während des Ablaufes des eingestellten Arbeitsprogrammes durch ein Heizelement erwärmt.

Ein wesentliches Merkmal üblicher Spülprogramme ist das Erwärmen der Spülflüssigkeit auf eine vorgegebene Solltemperatur, welche für ein gutes Reinigungsergebnis günstig ist. Die Aufheizgeschwindigkeit und damit auch die Dauer der Heizphase hängt besonders von dem in die Geschirrspülmaschine eingebrachten zu reinigenden Spülgut ab. Bei einer besonders großen Beladungsmenge, insbesondere mit Spülgutteilen mit einer besonders großen Masse ergibt sich eine besonders lange Heizphase und damit eine hohe Aufnahme an elektrischer Energie.

Es ist Aufgabe der Erfindung, ein Haushaltsgerät und ein Verfahren zum Betreiben desselben anzugeben, durch welche ein hoher Energieverbrauch auch bei einem Betrieb unter ungünstigen Bedingungen vermieden ist.

Die Lösung der Aufgabe erfolgt erfindungsgemäß durch ein Haushaltsgerät, mit den Merkmalen des Anspruchs 1 und ein Verfahren mit den Merkmalen des Anspruchs 5.

Damit dem Umstand Rechnung getragen wird, daß ein vom Haushaltsgerät zu bearbeitendes Gut je nach seiner Beschaffenheit einer unterschiedlichen Behandlung bedarf, ist das Haushaltsgerät insbesondere wahlweise mit voneinander verschiedenen Arbeitsprogrammen betreibbar. Diese Arbeitsprogramme können sich dann in einem oder mehreren Grenzwerten für die Energieaufnahme unterscheiden, so daß einem stärker zu behandelnden Gut ein höherer Grenzwert zugrunde gelegt wird.

Das Haushaltsgerät umfaßt insbesondere wenigstens eine elektrisch betriebene Komponente, welche während des Ablaufes des Arbeitsprogrammes bedarfsweise schaltbar ist. Für diese Komponente oder für wenigstens eine von mehreren umfaßten Komponenten kann ein maximal zulässiger Aufnahmewert an elektrischer Energie vorgesehen sein, der während des Ablaufes des Arbeitsprogrammes nicht überschritten werden darf. Der maximal zulässige Aufnahmewert kann vom ausgewählten Arbeitsprogramm abhängig sein.

Bei der Erfindung ist im Haushaltsgerät ein Heizelement zum Erwärmen eines Arbeitsmediums vorgesehen. Dieses Heizelement ist eine der vom Haushaltsgerät umfaßten elektrischen Komponenten, wobei deren Betrieb den gesamten Energieverbrauch des Haushaltsgerätes wesentlich beeinflussen kann. Um diesen Gesamtenergieverbrauch in Grenzen zu halten, ist es günstig, wenn während des Ablaufes des Arbeitsprogrammes eine maximale Heizzeit nicht überschritten wird. Dies kann dadurch erreicht werden, daß das Heizelement beim Erreichen einer vorgegebenen, maximal zulässigen Heizzeit unabhängig von der erreichten Temperatur des Arbeitsmediums abgeschaltet wird.

Für das jeweils gewählte Arbeitsprogramm ist weiterhin eine Solltemperatur vorgegeben, bei welcher erfahrungsgemäß eine besonders gute Behandlung des zu bearbeitenden Gutes erfolgt. Wird nach dem Abschalten des Heizelementes dann die erreichte Temperatur erfaßt und festgestellt, daß diese Solltemperatur nicht erreicht worden ist, so ist es möglich, wenig stens eine Maßnahme einzuleiten, die ggf. zu erwartenden Verschlechterungen des vom Haushaltsgerät zu erzielenden Arbeitsergebnisses infolge der nicht erreichten Solltemperatur entgegenwirkt. Eine solche Maßnahme kann in der Verlängerung des Arbeitsprogrammes bestehen, so daß das zu behandelnde Gut einer längeren Behandlung ausgesetzt ist.

Weist das vorgewählte Arbeitsprogramm wenigstens zwei Teilprogramme auf, so kann die maximal zulässige Heizzeit auf diese Teilprogramme entsprechend aufgeteilt sein.

Die Erfindung wird anhand der Zeichnungen eines Ausführungsbeispieles näher erläutert.

Dabei zeigen:

Fig. 1     ein Ablaufdiagramm eines Spülprogrammes einer Haushalt-Geschirrspülmaschine;

Fig. 2     ein Ablaufdiagramm des Reinigungsganges des Spülprogrammes von Fig. 1;

Fig. 3     ein Ablaufdiagramm des Klarspülganges des Spülprogrammes gemäß Figur 1; und

Fig. 4     ein Ablaufdiagramm des Trockenganges des Spülprogrammes gemäß Fig. 1.

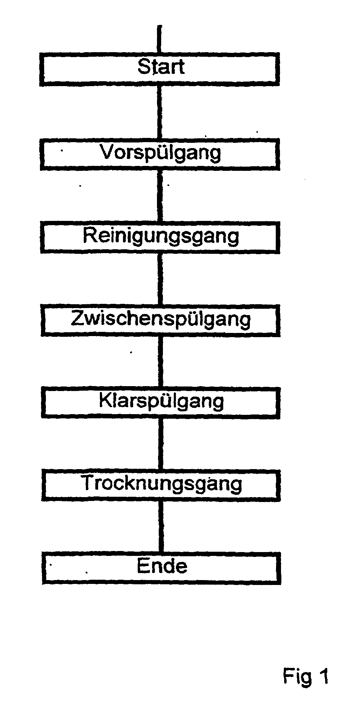

Eine eine elektronische Steuerung aufweisende Haushalt-Geschirrspülmaschine ist durch ein Spülprogramm zur Reinigung von zu spülendem Gut betreibbar. Das Spülprogramm ist von einer Bedienperson aus mehreren zur Verfügung stehenden, zueinander unterschiedlichen Spülprogrammen auswählbar. Diese Spülprogramme weisen mehrere Programmabschnitte entsprechend der Grobeinteilung gemäß Fig. 1 auf. Zu jedem Spülprogramm gehört jedenfalls ein Reinigungsgang, ein Zwischenspülgang, ein Klarspülgang und ein Trockengang. Spülprogramme, die einer besonders intensiven Reinigung des Spülgutes dienen, umfassen zusätzlich noch an ihrem Anfang einen Vorspülgang.

Ein Reinigigungsgang der erfindungsgemäßen

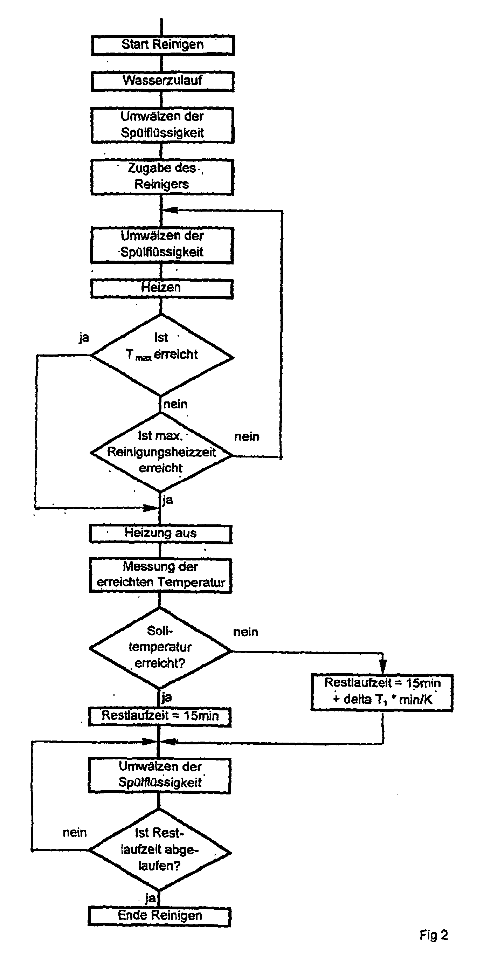

Geschirrspülmaschine beginnt gemäß Fig. 2 mit einem Zulauf von Frischwasser, welches anschließend als Spülflüssigkeit unter Zusatz eines Reinigungsmittels in der Geschirrspülmaschine umgepumpt und dabei mittels Sprüheinrichtungen auf das zu reinigende Spülgut gesprüht wird. Während die Spülflüssigkeit zum Zwecke der Reinigung des Spülgutes umgewälzt wird, erfolgt eine Erwärmung derselben mit Hilfe eines Heizstabes, der von der Spülflüssigkeit umspült wird. Ein Temperatursensor steht mit der Spülflüssigkeit in einem Berührkontakt, und mißt kontinuierlich oder in diskreten zeitlichen Abständen die Temperatur der Spülflüssigkeit. Ist eine dem gewählten Spülprogramm zugeordnete Maximaltemperatur erreicht, so wird die Heizung ausgeschaltet.

Um einen niedrigen Energieverbrauch während des Ablaufes des Spülprogrammes zu erreichen, wird ebenfalls kontinuierlich oder in diskreten zeitlichen Abständen die Einschaltdauer des Heizstabes mit einer für das ablaufende Spülprogramm charakteristischen maximalen Reinigungsheizzeit verglichen. Sobald diese maximale Reinigungsheizzeit erreicht ist, wird unabhängig von der erreichten Temperatur der Spülflüssigkeit die Heizung ausgeschaltet. Ein Ausschalten der Heizung erfolgt somit, wenn entweder die maximale Reinigungstemperatur oder die maximale Reinigungsheizzeit erreicht ist.

Nach dem Abschalten der Heizung wird die erreichte Temperatur der Spülflüssigkeit gemessen und der Meßwert der elektronischen Steuerung übermittelt. Dort wird die gemessene Temperatur mit der vorgesehen Solltemperatur verglichen und entsprechend die Restlaufzeit des Reinigungsganges eingestellt. Wurde während der Heizphase die Solltemperatur erreicht, wird das Umwälzen der Spülflüssigkeit bei gleichzeitigem Besprühen des Spülgutes für weitere 15 Minuten fortgesetzt. Wurde dagegen die Heizphase deshalb beendet, weil die maximale Reinigungsheizzeit erreicht worden war, so daß die erreichte Temperatur der Spülflüssigkeit geringer als die vorgegebene Solltemperatur ist, wird die Restlaufzeit des Reinigungsganges über diese 15 Minuten hinaus verlängert, wobei der Differenzwert T1 entsprechend der Formel

$$Restlaufzeit = 15\ min + T1\ x\ min/K$$

umgerechnet wird.

Nach Ablauf des Reinigungsganges erfolgt ein üblicher Zwischenspülgang, an dem sich ein mit den Merkmalen der Erfindung gekennzeichneter Klarspülgang anschließt.

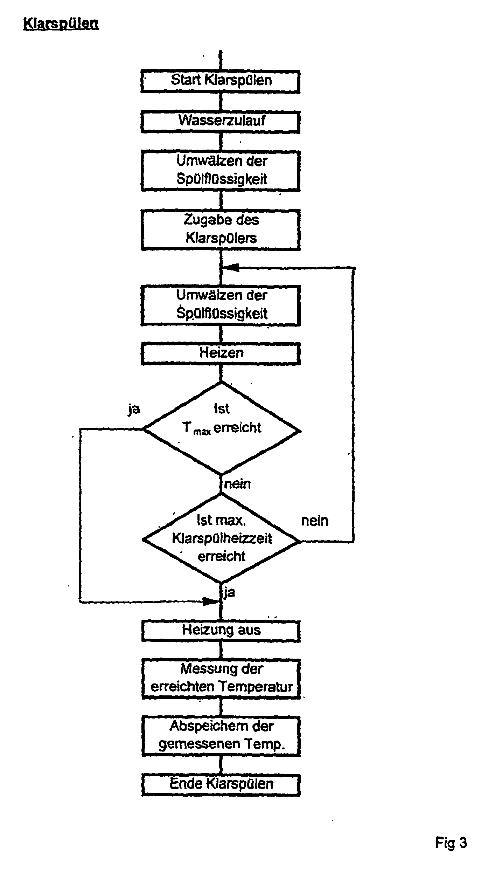

Dieser Klarspülgang umfaßt zunächst gemäß Figur 3 zu Beginn einen üblichen Wasserzulauf mit anschließendem Umwälzen der Flüssigkeit sowie einer Zugabe eines Klarspülmittels. Analog zum vorstehend beschriebenen Reinigungsgang wird die Spülflüssigkeit aufgeheizt, wobei die Heizphase durch Erreichen entweder einer vorgegebenen Solltemperatur oder einer ebenfalls vorgegebenen maximalen Klarspülheizzeit beendet wird. Nach dem Beenden der Heizphase erfolgt erneut ein Messen der erreichten Temperatur der Spülflüssigkeit und ein Abspeichern des Meßwertes der erzielten Klarspültemperatur. Im Gegensatz zum Reinigungsgang erfolgt keine Verlängerung des Klarspülganges wenn die Solltemperatur der Spülflüssigkeit nicht erreicht wird. Statt dessen beeinflußt der Meßwert der Klarspültemperatur den Trockengang, der dem Klarspülgang nachfolgt.

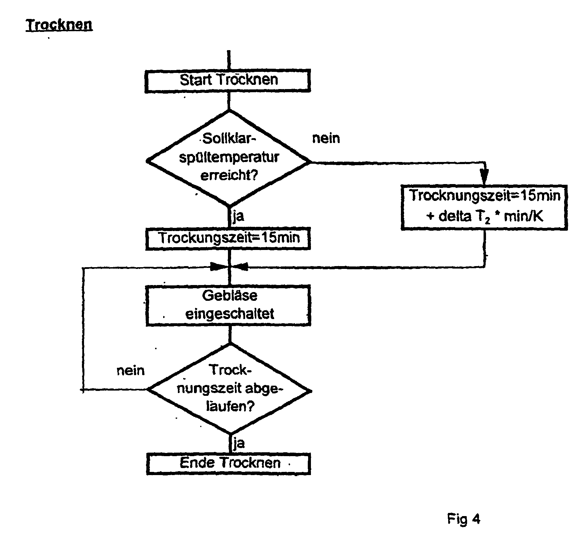

Zu Beginn der Trocknungsphase erfolgt gemäß Figur 4 eine Bestimmung der Dauer der Trocknung. Wurde im vorangegangenen Klarspülgang die Klarspül-Solltemperatur erreicht, so wird eine Trocknungszeit von 15 Minuten eingestellt. Ein Abschalten der Heizphase im Klarspülgang vor dem Erreichen der Solltemperatur bewirkt hingegen eine Verlängerung der Trocknungszeit in Abhängigkeit der Temperaturdifferenz T2 von Solltemperatur zu Isttemperatur im Klarspülgang. Die Trocknungszeit bestimmt sich dann nach folgender Formel:

$$Trocknungszeit = 15\ min + T2\ x\ min/K$$

Während der so bestimmten Trocknungszeit sorgt ein Gebläse für einen Abtransport der Feuchtluft aus dem Spülbehälter. Bei Bedarf kann auch noch ein gegebenenfalls getaktetes Zuschalten einer Heizquelle vorgesehen sein.

Bei einer besonderen Ausgestaltung der Erfindung sind die maximal zulässigen Heizzeiten während der Reinigungsphase und der Trocknungsphase von der an der Heizung anliegenden Spannung abhängig. Wird die Geschirrspülmaschine nämlich an einem Ort einer unregelmäßigen Spannungsversorgung betrieben, so kann auf diese Weise die Heizleistung berechnet und dann die jeweilige maximal zulässige Heizzeit abgeleitet werden. Darüber hinaus oder auch alternativ kann der Heizstrom erfaßt werden, so daß die Geschirrspülmaschine mit Heizeinrichtungen mit unterschiedlichen Leistungen bestückt werden kann. Die elektronische Steuerung bestimmt dann ohne vorherige Kenntnis der eingebauten Heizeinrichtung deren Heizleistung und leitet davon die maximal zulässige Heizzeit ab.

**Patentansprüche**

1. Haushaltsgerät, das mit wenigstens einem Arbeitsprogramm betreibbar ist und während des Ablaufes des Arbeitsprogrammes elektrische Energie aufnimmt, wobei wenigstens eine elektrisch betriebene Komponente umfasst ist, welche während des Ablaufes des Arbeitsprogrammes unter Aufnahme von elektrischer Energie betreibbar und bedarfsweise schaltbar ist, wobei die oder eine Komponente ein Heizelement zum Erwärmen eines Arbeitsmediums ist,
**dadurch gekennzeichnet,**
**dass** wenigstens ein Mittel zur Ermittlung der Höhe der aufgenommenen elektrischen Energie und wenigstens ein Grenzwert für die Energieaufnahme, bei dessen Erreichen der weitere Ablauf des Arbeitsprogrammes beeinflusst wird, vorgesehen sind, wobei wenigstens für das Heizelement ein maximal zulässiger Aufnahmewert an elektrischer Energie vorgesehen ist, welcher während des Ablaufes des Arbeitsprogrammes nicht überschritten wird, wobei durch die Einschaltdauer des Heizelements während des Ablaufes des Arbeitsprogrammes eine maximale Heizzeit nicht überschritten wird, wobei das Heizelement beim Erreichen der vorgegebenen maximalen Heizzeit unabhängig von der erreichten Temperatur des beheizten Arbeitsmediums abgeschaltet wird und nach dem Abschalten des Heizelementes die erreichte Temperatur des Arbeitsmediums erfasst wird und bei einem Unterschreiten einer ebenfalls vorgegebenen Solltemperatur wenigstens eine Maßnahme eingeleitet wird, die gegebenenfalls zu erwartenden Verschlechterungen des von dem Haushaltsgerät zu erzielenden Arbeitsergebnisses infolge der nicht erreichten Solltemperatur entgegenwirkt.

2.  Haushaltsgerät nach Anspruch 1,
    **dadurch gekennzeichnet,**
    **dass** das Haushaltsgerät wahlweise mit einem von mehreren voneinander verschiedenen Arbeitsprogrammen betreibbar ist, von denen sich wenigstens zwei in einem oder mehreren Grenzwerten unterscheiden.

3.  Haushaltsgerät nach Anspruch 1 oder 2,
    **dadurch gekennzeichnet,**
    **dass** für wenigstens eine weitere Komponente ein maximal zulässiger Aufnahmewert an elektrischer Energie vorgesehen ist, welcher während des Ablaufes des Arbeitsprogrammes nicht überschreitbar ist.

4.  Haushaltsgerät nach einem der Ansprüche 1 bis 3,
    **dadurch gekennzeichnet,**
    **dass** der maximal zulässige Aufnahmewert abhängig von dem ausgewählten Arbeitsprogramm ist.

5.  Verfahren zum Betreiben eines Haushaltsgerätes, welches wenigstens eine elektrisch betriebene Komponente umfasst, welche während des Ablaufes eines Arbeitsprogrammes bei Bedarf geschaltet wird und im Betrieb elektrische Energie aufnimmt,
    **dadurch gekennzeichnet,**
    **dass** Maßnahmen ergriffen werden, so dass die eine oder wenigstens eine Komponente während des Ablaufes des Arbeitsprogrammes einen oder mehrere vorgegebene Grenzwerte für die aufgenommene elektrische Energie nicht überschreitet, wobei eine Komponente ein Heizungselement zum Erwärmen eines Arbeitsmediums ist, dessen Einschaltdauer während des Ablaufes des Arbeitsprogrammes eine maximale Heizzeit nicht überschreitet, wobei das Heizelement beim Erreichen der vorgegebenen maximalen Heizzeit unabhängig von der erreichten Temperatur des beheizten Arbeitsmediums abgeschaltet wird und nach dem Abschalten des Heizelementes die erreichte Temperatur des Arbeitsmediums erfasst wird und bei einem Unterschreiten einer ebenfalls vorgegebenen Solltemperatur wenigstens eine Maßnahme eingeleitet wird, die gegebenenfalls zu erwartenden Verschlechterungen des von dem Haushaltsgerät zu erzielenden Arbeitsergebnisses infolge der nicht erreichten Solltemperatur entgegenwirkt.

6.  Verfahren nach Anspruch 5,
    **dadurch gekennzeichnet,**
    **dass** eine Maßnahme in der Verlängerung des Arbeitsprogrammes besteht.

7.  Verfahren nach einem der Ansprüche 5 oder 6,
    **dadurch gekennzeichnet,**
    **dass** jeder erzielbaren Temperatur des Arbeitsmediums eine entsprechende Länge des Arbeitsprogrammes zugeordnet ist und bei Erreichen einer bestimmten Temperatur die dieser Temperatur zugeordnete Länge des Arbeitsprogrammes ausgewählt wird.

8.  Verfahren nach einem der Ansprüche 5 bis 7,
    **dadurch gekennzeichnet,**
    **dass** die maximale Heizzeit auf wenigstens zwei Teilprogramme des Arbeitsprogrammes aufgeteilt ist.

**Claims**

1.  Domestic appliance, which is operable with at least one operating programme and absorbs electrical energy during the course of the operating programme, wherein at least one electrically operated component is comprised which during the course of the operating programme is operable and if necessary switchable whilst absorbing electrical energy, the component or one component being a heating element for heating an operating medium, **characterised in that** at least one means for determining the level of electrical energy being absorbed and at least one threshold value for energy absorption - which threshold value, upon being reached, modifies the further course of the operating programme - are provided, wherein at least for the heating element a maximum admissible absorption value of electrical energy is provided, which is not exceeded during the course of the operating programme, wherein a maximum heating time is not exceeded by the switch-on duration of the heating element during the course of the operating programme, wherein the heating element, upon reaching the specified maximum heating time is switched off independently of the temperature of the heated operating medium reached and after switching off of the heating element the temperature reached by the operating medium is detected, and if the temperature falls short of a likewise specified setpoint temperature, at least one measure is taken which if necessary counteracts expected worsening of the operating result to be achieved by the domestic appliance due to the fact that the setpoint temperature is not reached..

2. Domestic appliance according to claim 1, **characterised in that** the domestic appliance is operated selectively with one of plural different operating programmes, from which at least two differ in one or more threshold values.

3. Domestic appliance according to claim 1 or 2, **characterised in that** for at least one further component a maximum admissible absorption value for electrical energy is provided, which may not be exceeded during the course of the operating programme.

4. Domestic appliance according to one of claims 1 to 3, **characterised in that** the maximum admissible absorption value for electrical energy is dependent on the operating programme selected.

5. Method of operating a domestic appliance, which comprises at least one electrically operated component, which is switched as required during the course of an operating programme and during operation absorbs electrical energy, **characterised in that** measures are taken whereby the one or at least one component does not exceed one or more specified threshold values for the electrical energy absorbed during the course of the operating programme, wherein one component is a heating element for heating an operating medium, whose switch-on duration during the course of the operating programme does not exceed a maximum heating time, wherein the heating element is switched off upon reaching the specified maximum heating time independently of the temperature reached by the heated operating medium and after switching off of the heating element the temperature reached by the operating medium is detected and if a likewise specified setpoint temperature is not reached at least one measure is carried out which counteracts any expected worsening of the operating result to be achieved by the domestic appliance due to the fact that the setpoint temperature is not reached.

6. Method according to claim 5, **characterised in that** one measure consists in extending the operating programme.

7. Method according to one of claims 5 or 6, **characterised in that** a corresponding length of the operating programme is allocated to each achievable temperature of the operating medium, and upon reaching of a specified temperature the length of operating programme allocated to that temperature is selected.

8. Method according to one of claims 5 to 7, **characterised in that** the maximum heating time is divided into at least two subsidiary programmes of the operating programme.

## Revendications

1. Appareil ménager, qui peut être amené à fonctionner avec au moins un programme de travail et qui, pendant le déroulement du programme de travail, absorbe de l'énergie électrique, comprenant au moins un composant fonctionnant de manière électrique qui, pendant le déroulement du programme de travail, en absorbant de l'énergie électrique, peut être amené à fonctionner et peut être commuté selon le besoin, où le ou un composant est un élément chauffant pour chauffer un fluide de travail,
**caractérisé**
**en ce qu'**au moins un moyen pour déterminer la quantité de l'énergie électrique absorbée et au moins une valeur limite pour l'absorption d'énergie, dont l'atteinte se répercute sur le déroulement ultérieur du programme de travail, est prévu, où au moins pour l'élément chauffant est prévue une valeur d'absorption maximale autorisée en énergie électrique qui, pendant le déroulement du programme de travail, n'est pas dépassée, où par la durée en service de l'élément chauffant pendant le déroulement du programme de travail, un temps de chauffage maximal n'est pas dépassé, où l'élément chauffant, lors de l'atteinte de la durée de chauffage maximale prédéterminée, indépendamment de la température atteinte du milieu de travail chauffé, est mis hors service et, après la mise hors service de l'élément chauffant, la température atteinte du milieu de travail est détectée et, lors d'une non-atteinte d'une température de consigne également prédéterminée, au moins une mesure est prise qui s'oppose à des réductions, auxquelles il faut s'attendre le cas échéant, du résultat de travail à obtenir par l'appareil ménager, par suite de la température de consigne non atteinte.

2. Appareil ménager selon la revendication 1, **caractérisé en ce que** l'appareil ménager peut être amené à fonctionner sélectivement selon un de plusieurs programmes de travail différents les uns des autres, dont au moins deux se différencient par une ou plusieurs valeurs limites.

3. Appareil ménager selon la revendication 1 ou 2, **caractérisé en ce que** pour au moins un composant ultérieur, une valeur d'absorption maximale autorisée en énergie électrique est prévue qui, pendant le déroulement du programme de travail, ne peut pas être dépassée.

4. Appareil ménager selon l'une des revendications 1 à 3, **caractérisé en ce que** la valeur d'absorption maximale autorisée dépend du programme de travail sélectionné.

5. Procédé de fonctionnement d'un appareil ménager qui comprend au moins un composant fonctionnant de manière électrique, qui est commuté pendant le déroulement d'un programme de travail en cas de besoin et qui absorbe lors du fonctionnement de l'énergie électrique, **caractérisé en ce que** des mesures sont prises pour qu'un ou au moins un composant précité, pendant le déroulement du programme de travail, ne dépasse pas une ou plusieurs valeurs limites prédéterminées de l'énergie électrique absorbée, où un composant est un élément chauffant pour chauffer un fluide de travail, dont la durée en service, pendant le déroulement du programme de travail, ne dépasse pas une durée de chauffage maximale, où l'élément chauffant, lors de l'atteinte de la durée de chauffage maximale prédéterminée, est mis hors service indépendamment de la température atteinte du fluide de travail chauffé et, après la mise hors service de l'élément chauffant, la température atteinte du fluide de travail est détectée et, lors d'une non-atteinte d'une température de consigne également prédéterminée, au moins une mesure est prise qui s'oppose à des réductions, auxquelles il faut s'attendre le cas échéant, du résultat de travail à obtenir par l'appareil ménager, par suite de la température de consigne non atteinte.

6. Procédé selon la revendication 5, **caractérisé en ce qu'**une mesure consiste à prolonger le programme de travail.

7. Procédé selon l'une des revendications 5 ou 6, **caractérisé en ce qu'**il est associé à chaque température pouvant être atteinte du fluide de travail une durée correspondante du programme de travail et, lors de l'atteinte d'une température déterminée, la durée du programme de travail associée à cette température est sélectionnée.

8. Procédé selon l'une des revendications 5 à 7, **caractérisé en ce que** la durée de chauffage maximale est répartie sur au moins deux programmes partiels du programme de travail.

```
            ┌─────────────────────────┐
            │          Start          │
            └─────────────────────────┘
                         │
            ┌─────────────────────────┐
            │       Vorspülgang       │
            └─────────────────────────┘
                         │
            ┌─────────────────────────┐
            │      Reinigungsgang     │
            └─────────────────────────┘
                         │
            ┌─────────────────────────┐
            │     Zwischenspülgang    │
            └─────────────────────────┘
                         │
            ┌─────────────────────────┐
            │       Klarspülgang      │
            └─────────────────────────┘
                         │
            ┌─────────────────────────┐
            │      Trocknungsgang     │
            └─────────────────────────┘
                         │
            ┌─────────────────────────┐
            │           Ende          │
            └─────────────────────────┘
```

Fig 1

Fig 2

**Klarspülen**

```
                    ┌──────────────────────┐
                    │    Start Klarspülen   │
                    └──────────────────────┘
                              │
                    ┌──────────────────────┐
                    │     Wasserzulauf      │
                    └──────────────────────┘
                              │
                    ┌──────────────────────┐
                    │    Umwälzen der       │
                    │    Spülflüssigkeit    │
                    └──────────────────────┘
                              │
                    ┌──────────────────────┐
                    │     Zugabe des        │
                    │     Klarspülers       │
                    └──────────────────────┘
                              │
                              ▼◄──────────────┐
                    ┌──────────────────────┐  │
                    │    Umwälzen der       │  │
                    │    Spülflüssigkeit    │  │
                    └──────────────────────┘  │
                              │                │
                    ┌──────────────────────┐  │
                    │       Heizen          │  │
                    └──────────────────────┘  │
                              │                │
              ja           ╱  Ist  ╲          │
          ◄───────────────  T max erreicht    │
          │              ╲         ╱          │
          │                 │ nein            │
          │                 ▼                 │
          │              ╱ Ist max. ╲   nein  │
          │         ── Klarspülheizzeit ──────┘
          │              ╲ erreicht ╱
          │                 │ ja
          └────────────────►▼
                    ┌──────────────────────┐
                    │     Heizung aus       │
                    └──────────────────────┘
                              │
                    ┌──────────────────────┐
                    │    Messung der        │
                    │  erreichten Temperatur│
                    └──────────────────────┘
                              │
                    ┌──────────────────────┐
                    │   Abspeichern der     │
                    │   gemessenen Temp.    │
                    └──────────────────────┘
                              │
                    ┌──────────────────────┐
                    │    Ende Klarspülen    │
                    └──────────────────────┘
```

Fig 3

**Trocknen**

Fig 4